# EUROPEAN PATENT SPECIFICATION

(11) **EP 0 697 550 B1**
(45) Date of publication and mention of the grant of the patent: **06.12.2000**
(21) Application number: 95305613.2
(22) Date of filing: 11.08.1995
(51) Int. Cl.: F16J 15/08

(54) **Gasket**
Abdichtung
Joint d'étanchéité

(30) Priority: 19.08.1994 JP 19526994
(43) Date of publication of application: 21.02.1996
(73) Proprietor: NIPPON GASKET CO., LTD., Higashiosaka-shi, Osaka-fu (JP)
(72) Inventor: Kubouchi, Kenji, Osaka (JP); Fukui, Yuji, Osaka (JP); Inoue, Kunitoshi, Osaka (JP)
(74) Representative: Price, Paul Anthony King

(56) References cited:
- EP-A- 0 433 530
- EP-A- 0 574 770
- US-A- 4 799 695

## Description

This invention relates to a metal gasket for sealing a joint between a cylinder head and a cylinder block in an internal combustion engine. The gasket comprises two elastic metal plates laid on each other and each having a plurality of holes for combustion chambers and a bead formed along the edge of each hole, and a grommet attached to one of those plates.

A reduction in weight, as well as an increase in output and an elevation in working temperature, is required of an internal combustion engine, and is realized by employing aluminum, instead of cast iron, for making both a cylinder head and a cylinder block, or at least the cylinder head. As aluminum is lower in rigidity, however, the cylinder head and block which are made of aluminum are likely to be lower in rigidity and easily displaceable from each other when the engine is placed in operation.

The joint between the cylinder head and block of an internal combustion engine is sealed by a metal gasket having a bead forming an elastic seal between the flat surfaces of the cylinder head and block when fastening devices, such as bolts, are tightened for holding the cylinder head fast to the cylinder block with the gasket disposed therebetween. The tightening force applied to the bolts, however, causes the cylinder head to bend, thereby creating an undesirably large clearance and distortion of material particularly around the combustion chamber. The clearance and distortion cause combustion gases to leak and spoil or damage the gasket, while the substances deposited on the gasket from those gases lower its sealing property. The pressure of the combustion gases and the heat of the engine cause changes in the width of the clearance between the flat surfaces around the combustion chamber, and as a result the failure of the bead on the gasket and a reduction in the tightening force of the bolts bring about a reduction in the sealing effect of the gasket.

Under these circumstances, there is known a metal gasket which comprises two elastic metal plates each having a bead formed along the edge of each bore, a grommet disposed between the elastic metal plates and close to a cylinder head and an intermediate plate disposed therebetween and close to a cylinder block, the grommet having an inner edge folded toward the cylinder block and over the inner edge of the intermediate plate, so that any clearance between the flat surfaces around the combustion chamber may be filled to prevent any reduction in function of the bead, while the elastic metal plates have a uniform spring force along the beads, so that the gasket may be improved in sealing property and durability, as disclosed in Japanese Patent Application KOKAI No. Sho 64-73157 (hereinafter referred to as "Prior Art 1"). There is also known a metal gasket which comprises two elastic metal plates each having a plurality of adjoining holes for combustion chambers and a bead formed along the edges of those holes, an intermediate plate disposed therebetween, and a grommet folded toward a cylinder head for holding one of the elastic metal plates which faces a cylinder block, and the intermediate plate having a bead formed along the bead on the elastic metal plate and projecting toward the cylinder head, as disclosed in Japanese Utility Model Application KOKAI No. 4-34562 ("Prior Art 2").

Both of the gaskets according to Prior Arts 1 and 2 are, however, an assembly of four plates and are, therefore, more expensive than any gasket formed by three plates, from the standpoint of material and manufacturing costs. Moreover, Prior Art 1 has a problem due to the inner edge of the grommet folded toward the cylinder block for holding the inner edge of the intermediate plate. When the gasket is compressed between the cylinder head and block, the folded portion of the grommet acts as a shim for the bead on one of the elastic metal plates. As a result, the elastic metal plate facing the cylinder head has an amplitude of stress which is greater than that of the plate facing the cylinder block, and the grommet has a large bending stress and a large amplitude of stress which cause the cracking and failure of the grommet and the bead on the plate facing the cylinder head.

The gasket according to Prior Art 2 is likely to lose stability under load, and suffer from a lowering of its sealing property and the cracking of its beads, since the bead on the intermediate plate contacts at its top the bead on the elastic metal plate facing the cylinder head.

The low sealing property of the known gasket, whether according to Prior Art 1 or 2, and the failure and cracking of its beads are apparently due to the fact that the beads are of the same construction between the bores of the cylinder head and block as around the bores, despite the presence of a difference in rigidity, and that the gasket cannot adapt itself to the distortion of the cylinder head and block which results from the difference in rigidity.

According to the present invention, there is provided a metal gasket for a cylinder head, comprising:
an elastic metal base plate having a bead formed along the edge of each of a plurality of juxtaposed holes for combustion chambers;
an elastic metal adjusting plate having a bead formed along the edge of each of a plurality of juxtaposed holes for combustion chambers; and
a grommet having a plurality of juxtaposed holes for combustion chambers, said holes in said grommet being smaller in diameter when said grommet is unfolded than said holes in said plates, and said grommet being folded about the edges of said holes in said adjusting plate lying between said base plate and said grommet to form a plurality of bores from said holes aligned with one another;
characterized in that:
each bead of said base plate is formed from a first type of bead which has, in the radially inward direction towards the respective hole, a cross-section of an upwardly sloping portion followed by a flat portion followed by a downwardly sloping portion, and a second type of bead which has, in the radially inward direction towards the respective hole, a cross-section of an upwardly sloping portion followed by a flat portion which extends to said respective hole;
said beads of said base plate are of said first type between said holes of said base plate and elsewhere are of said second type;
each bead of said adjusting plate is formed from a third type of bead which has, in the radially inward direction towards the respective hole, a cross-section which rises up and then descends in a symmetrical manner; and
around each bore, said flat portions of the respective bead of said base plate are positioned at the top of the respective bead of said adjusting plate.

The gasket has a uniform distribution of pressure on its sealing surfaces owing to the difference in shape of the beads on the base plate from being of the first type between every two adjoining holes to being of the second type elsewhere around the holes, as the cylinder head and block have a difference in rigidity from between every two adjoining bores to around the remaining edges of each bore. Also, the beads on the adjusting plate are of the third type around each hole, and the flat portions of the beads of the base plate are positioned at the tops of the beads of the adjusting plate.

The gasket provides an effective seal for a long period of time, since the folded portions of the grommet holding the adjusting plate serve as stoppers for the beads on the base and adjusting plates and protect them against collapsing.

The gasket can be manufactured at a low cost from three plates and has a good balance of stress acting upon it, including a reduction in the variation of stress acting upon the base plate facing the cylinder head and more liable to displacement, and exhibits an outstanding sealing property.

Any bending stress acting upon the grommet is satisfactorily reduced, and the beads and the grommet are not easily broken to lower the sealing effect of the gasket.

Preferably, where each bead of said base plate is of said first type, between said holes of said base plate, it is formed as a straight length. The strength of the bead is inversely proportional to the rigidity of the material at the narrowest portion between two adjoining holes and the gradually widening portions contiguous thereto, and the gasket exhibits an improved sealing property owing to a uniform distribution of pressure on its sealing surfaces between adjoining bores and in their vicinity.

Preferably, said grommet is so folded about the edges of said holes of said adjusting plate as to have a wider folded width between said bores and a narrower folded width elsewhere. The gasket exhibits an improved sealing property owing to a still more uniform distribution of pressure on the sealing surfaces between adjoining bores.

Preferably, said adjusting plate has along said edges of its holes a greater thickness between said bores than along the remaining edges of said bores. The gasket exhibits an improved sealing property owing to the compensation for any deformation occurring to the cylinder head between adjoining bores.

Preferably, those surfaces of said plates and grommet which contact one another, and which in use contact a cylinder head and cylinder block, are coated with a heat-resistant rubber or resin. The gasket exhibits an improved sealing property owing to a still more intimate contact of the gasket with the cylinder head and block and of the constituent members of the gasket with one another which prevents any leakage that might otherwise be caused by any scratch or like defect formed on any member of the gasket during its manufacture.

The invention will now be described by way of non-limiting examples with reference to the accompanying drawings, in which:-
Figure 1 is a partial top plan view of a gasket according to this invention;
Figure 2 is an exploded sectional view taken along the line A-A of Figure 1 and showing Example 1 of this invention;
Figure 3 is an enlarged sectional view taken along the line B-B of Figure 1;
Figure 4 is an enlarged sectional view taken along the line C-C of Figure 1;
Figure 5 is an enlarged top plan view showing part D of Figure 1 between two bores as Example 2 of this invention;
Figure 6 is a top plan view of a part of a gasket according to Example 3 of this invention around a bore which is shown by excluding a base plate facing a cylinder head; and
Figure 7 is an enlarged sectional view taken along the line A-A of Figure 1 and showing Example 4 of this invention.

### Example 1

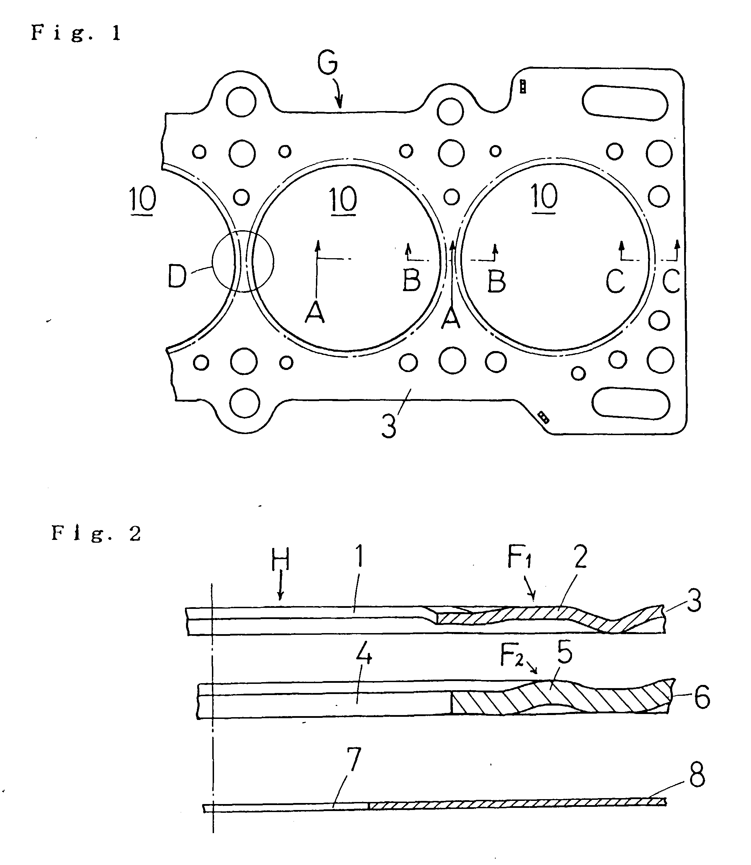

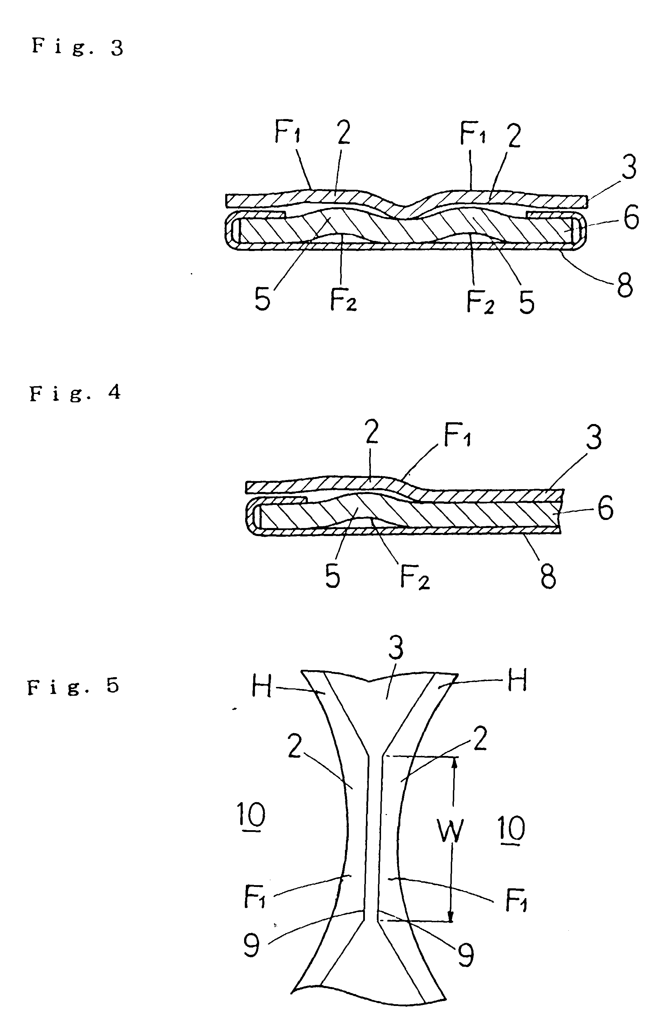

Referring to Figures 1 to 4, there is shown a gasket G comprising an elastic metal base plate 3 having a plurality of holes 1 for combustion chambers and a bead 2 formed along the edge of each hole 1, an elastic metal adjusting plate 6 having a plurality of holes 4 for combustion chambers and a bead 5 formed along the edge of each hole 4, and a grommet 8 having a plurality of holes 7 for combustion chambers which are smaller in diameter than the holes 1 and 4. The base plate 3 is of SUS 301 3/4H and has a thickness of 0.3 mm, the adjusting plate 6 is of SECC and has a thickness of 0.6 mm, and the grommet 8 is of SUS 304 and has a thickness of 0.15 mm. The grommet 8 is folded back toward a cylinder head to cover and hold the edges of the holes 4 in the adjusting plate 6 to thereby form a plurality of juxtaposed bores 10. The bead 2 on the base plate 3 is of a first type F₁ between every two adjoining holes 1, and is of a second type H elsewhere, as shown in Figures 2 to 4. The bead 5 on the adjusting plate 6 is of a third type F₂ along the entire edge of each hole 4. The bead 2 extends over the bead 5 between every two adjoining bores 10, as shown in Figure 3.

### Example 2

The bead 2 formed as the first type F₁ on the base plate 3 between every two adjoining holes 1 in the gasket of Example 1 is modified in Example 2 so as to have a straight length 9 extending along an appropriate length W in the range of, say, 15 to 30 mm.

### Example 3

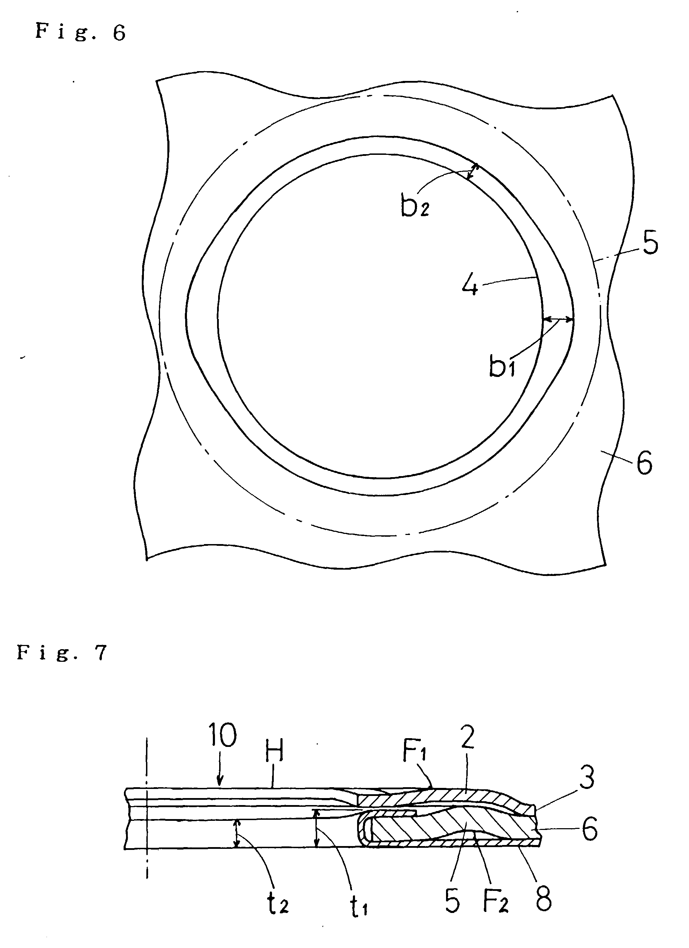

Compared with Example 1 or 2, the grommet 8 in Example 3 is so folded back about the edge of each hole 4 in the adjusting plate 6 as to have a folded width b₁ of 2.0 to 3.0 mm between every two adjoining bores 10 and a smaller folded width b₂ in the range of 1.0 to 1.5 mm along the remaining edge of each bore 10, as shown in Figure 6.

### Example 4

Compared with Example 1, 2 or 3, the adjusting plate 6 of Example 4 has a varying thickness along the edge of each hole about which the grommet 8 is folded, i.e. retains its original thickness t₁ of 0.6 mm between every two adjoining bores 10 and has a reduced thickness t₂ of 0.550 mm along the remaining edge of each bore 10, as shown in Figure 7.

Those surfaces of the plates 3 and 6 and grommet 8 which contact one another, and which contact the cylinder head and block not shown, may be coated with a heat-resistant rubber, or resin, such as fluororubber or silicone rubber, though no such coating is shown in the drawings. Such coating improves the sealing property of the gasket, as it ensures a still more intimate contact of the gasket with the cylinder head and block, and of the gasket members with one another and thereby prevents any leakage that might otherwise be caused by any scratch or like defect formed on any member of the gasket during its manufacture.

## Claims

1. A metal gasket (G) for a cylinder head, comprising:
an elastic metal base plate (3) having a bead (2) formed along the edge of each of a plurality of juxtaposed holes (1) for combustion chambers;
an elastic metal adjusting plate (6) having a bead (5) formed along the edge of each of a plurality of juxtaposed holes (4) for combustion chambers; and
a grommet (8) having a plurality of juxtaposed holes (7) for combustion chambers, said holes (7) in said grommet being smaller in diameter when said grommet is unfolded than said holes (1, 4) in said plates (3, 6), and said grommet (8) being folded about the edges of said holes (4) in said adjusting plate (6) lying between said base plate (3) and said grommet (8) to form a plurality of bores (10) from said holes (1, 4, 7) aligned with one another;
characterized in that:
each bead (2) of said base plate (3) is formed from a first type of bead (F1) which has, in the radially inward direction towards the respective hole (1), a cross-section of an upwardly sloping portion followed by a flat portion followed by a downwardly sloping portion, and a second type of bead (H) which has, in the radially inward direction towards the respective hole (1), a cross-section of an upwardly sloping portion followed by a flat portion which extends to said respective hole (1);
said beads (2) of said base plate (3) are of said first type (F1) between said holes (1) of said base plate and elsewhere are of said second type (H);
each bead (5) of said adjusting plate (6) is formed from a third type of bead (F2) which has, in the radially inward direction towards the respective hole (4), a cross-section which rises up and then descends in a symmetrical manner; and
around each bore (10), said flat portions of the respective bead (2) of said base plate (3) are positioned at the top of the respective bead (5) of said adjusting plate (6).

2. A gasket as set forth in claim 1, wherein where each bead (2) of said base plate (3) is of said first type (F1), between said holes (1) of said base plate, it is formed as a straight length (W).

3. A gasket as set forth in claim 1 or 2, wherein said grommet (8) is so folded about the edges of said holes (4) of said adjusting plate (6) as to have a wider folded width (b1) between said bores (10) and a narrower folded width (b2) elsewhere.

4. A gasket as set forth in any one of claims 1 to 3, wherein said adjusting plate (6) has along said edges of its holes (4) a greater thickness between said bores (10) than along the remaining edges of said bores.

5. A gasket as set forth in any one of claims 1 to 4, wherein those surfaces of said plates (3, 6) and grommet (8) which contact one another, and which in use contact a cylinder head and a cylinder block, are coated with a heat-resistant rubber or resin.

## Patentansprüche

1. Metalldichtung (G) für einen Zylinderkopf mit:
einer elastischen Metallgrundplatte (3) mit einer Sicke (2), welche entlang der Kante eines jeden von mehreren nebeneinander angeordneten Löchern (1) für Verbrennungskammern ausgebildet ist,
einem elastischen Metallstellblech (6) mit einer Sicke (5), welche entlang der Kante eines jeden von mehreren nebeneinander angeordneten Löchern (4) für Verbrennungskammern ausgebildet ist, und
einer Tülle (8) mit mehreren nebeneinander angeordneten Löchern (7) für Verbrennungskammern, wobei diese Löcher (7) in der Tülle einen kleineren Durchmesser haben, wenn die Tülle entfaltet ist, als die Löcher (1, 4) in den Platten (3, 6), und die Tülle (8) ist um die Kanten der Löcher (4) in dem Stellblech (6) herum gefaltet, welches zwischen der Grundplatte (3) und der Tülle (8) unter Ausbildung mehrerer Bohrungen (10) aus den Löchern (1, 4, 7), welche aneinander ausgerichtet sind,
dadurch gekennzeichnet, daß
jede Sicke (2) der Grundplatte (3) aus einem ersten Sickentyp (F1) gebildet ist, welcher in der radial einwärts weisenden Richtung in Richtung des entsprechenden Loches (1) einen Querschnitt mit einem aufwärts geneigten Abschnitt, gefolgt von einem flachen Abschnitt, gefolgt von einem abwärts geneigten Abschnitt aufweist, und einem zweiten Sickentyp (H), welcher in der radial einwärts weisenden Richtung in Richtung des entsprechenden Loches (1) einen Querschnitt mit einem aufwärts geneigten Abschnitt, gefolgt von einem flachen Abschnitt, welcher sich zu dem entsprechenden Loch (1) erstreckt, aufweist,
die Sicken (2) der Grundplatte (3) vom ersten Typ (F1) sind und diejenigen zwischen den Löchern (1) der Grundplatte und anderswo vom zweiten Typ (H) sind,
jede Sicke (5) des Stellblechs (6) aus einem dritten Sickentyp (F2) gebildet ist, welche in der radial einwärts weisenden Richtung in Richtung des entsprechenden Loches (4) einen Querschnitt hat, welcher ansteigt und anschließend in symmetrischer Weise abfällt, und
um jede Bohrung (10) herum die flachen Abschnitte der entsprechenden Sicke (2) der Grundplatte (3) auf der Oberseite der entsprechenden Sicke (5) des Stellblechs (6) angeordnet sind.

2. Dichtung nach Anspruch 1, wobei jede Sicke (2) der Grundplatte (3) vom ersten Typ (F1) und zwischen den Löchern (1) der Grundplatte als eine gerade Länge (W) ausgebildet ist.

3. Dichtung nach einem der Ansprüche 1 oder 2, wobei die Tülle (8) so um die Kanten der Löcher (4) des Stellblechs (6) gefaltet ist, daß sie zwischen den Bohrungen (10) eine größere gefaltete Weite (b1) und woanders eine engere gefaltete Weite (b2) hat.

4. Dichtung nach einem der Ansprüche 1 bis 3, wobei das Stellblech (6) entlang der Kanten seiner Löcher (4) zwischen den Bohrungen (10) eine größere Dicke hat als entlang der übrigen Kanten der Bohrungen.

5. Dichtung nach einem der Ansprüche 1 bis 4, wobei diejenigen Flächen der Platten (3, 6) und der Tülle (8), welche einander berühren und welche bei der Verwendung einen Zylinderkopf und einen Zylinderblock berühren, mit einem hitzebeständigen Gummi oder Harz beschichtet sind.

## Revendications

1. Joint d'étanchéité métallique (G) pour une culasse, comportant :
une plaque de base (3) en métal élastique ayant une nervure (2) formée le long du bord de chacun de plusieurs trous juxtaposés (1) pour des chambres de combustion ;
une plaque (6) de réglage en métal élastique ayant une nervure (5) formée le long du bord de chacun de plusieurs trous juxtaposés (4) pour des chambres de combustion ; et
un oeillet (8) ayant plusieurs trous juxtaposés (7) pour des chambres de combustion, lesdits trous (7) dudit oeillet étant d'un diamètre plus petit, lorsque ledit oeillet est déplié, que celui desdits trous (1, 4) desdites plaques (3, 6), et ledit oeillet (8) étant plié autour des bords desdits trous (4) dans ladite plaque de réglage (6) s'étendant entre ladite plaque de base (3) et ledit oeillet (8) pour former plusieurs lumières (10) à partir desdits trous (1, 4, 7) alignés entre eux ;
caractérisé en ce que :
chaque nervure (2) de ladite plaque de base (3) est formée d'un premier type de nervure (F1) qui présente, dans la direction orientée radialement vers l'intérieur vers le trou respectif (1), une section transversale d'une partie en pente vers le haut suivie d'une partie plate suivie d'une partie en pente vers le bas, et un second type de nervure (H) qui présente, dans la direction radialement vers l'intérieur vers le trou respectif (1), une section transversale d'une partie en pente vers le haut suivie d'une partie plate qui s'étend jusqu'audit trou respectif (1) ;
lesdites nervures (2) de ladite plaque de base (3) sont dudit premier type (F1) entre lesdits trous (1) de ladite plaque de base et sont par ailleurs dudit second type (H) ;
chaque nervure (5) de ladite plaque (6) de réglage est formée d'un troisième type de nervure (F2) qui présente, dans la direction orientée radialement vers l'intérieur vers le trou respectif (4), une section transversale qui s'élève puis descend d'une manière symétrique ; et
autour de chaque lumière (10), lesdites parties plates de la nervure respective (2) de ladite plaque de base (3) sont positionnées au sommet de la nervure respective (5) de ladite plaque de réglage (6).

2. Joint d'étanchéité selon la revendication 1, dans lequel, dans le cas où chaque nervure (2) de ladite plaque de base (3) est dudit premier type (F1), entre lesdits trous (1) de ladite plaque de base, elle est formée en une longueur droite (W).

3. Joint d'étanchéité selon la revendication 1 ou 2, dans lequel ledit oeillet (8) est plié autour des bords desdits trous (4) de ladite plaque de réglage (6) de façon à avoir une largeur pliée plus grande (b1) entre lesdites lumières (10) et une largeur pliée plus petite (b2) ailleurs.

4. Joint d'étanchéité selon l'une quelconque des revendications 1 à 3, dans lequel ladite plaque de réglage (6) présente, le long desdits bords de ses trous (4), une épaisseur plus grande entre lesdites lumières (10) que le long des bords restants desdites lumières.

5. Joint d'étanchéité selon l'une quelconque des revendications 1 à 4, dans lequel les surfaces desdites plaques (3,6) et de l'oeillet (8) qui entrent en contact entre elles et qui, lors de l'utilisation, sont en contact avec une culasse et un bloc-cylindres sont revêtues d'un caoutchouc ou d'une résine résistant à la chaleur.
